# EUROPÄISCHE PATENTSCHRIFT

(11) **EP 3 453 575 B1**
(45) Veröffentlichungstag und Bekanntmachung des Hinweises auf die Patenterteilung: **31.05.2023**
(21) Anmeldenummer: 18177659.2
(22) Anmeldetag: 14.06.2018
(51) Int. Cl.: B60R 13/08, C08K 3/04, C08K 3/40, F02B 77/11, G10K 11/162

(54) **EINHAUSUNG**
HOUSING
CARTER

(30) Priorität: 11.09.2017 DE 102017215947
(43) Veröffentlichungstag der Anmeldung: 13.03.2019
(73) Patentinhaber: ContiTech Elastomer-Beschichtungen GmbH, 30165 Hannover (DE)
(72) Erfinder: Patsouras, Dimitrios, 65719 Hofheim (DE); Paulsen, Hans-Peter, 37079 Göttingen (DE); Joest, Robert, 65934 Frankfurt (DE); Storre, Jens, 37176 Nörten-Hardenberg (DE); Schiller, Christian, 67146 Deidesheim (DE); Linzmaier, Markus, 72149 Remmingsheim (DE); Walther, Christian, 89296 Osterberg (DE)
(74) Vertreter: Continental Corporation

(56) Entgegenhaltungen:
- CA-A1- 2 189 727
- JP-A- 2009 128 036
- US-A- 3 815 611
- US-A1- 2017 210 034

## Beschreibung

Die Erfindung betrifft eine Motorkapsel, welche als bauliche Vorrichtung insbesondere zur Dämmung von akustischen und / oder thermischen Emissionen dient.

Einhausungen finden zum Beispiel für stationäre Maschinen, Produktionsanlagen oder auch für Bauteile in Elektrogeräten, Kraftfahrzeugen usw. Verwendung.

Eine Einhausung, welche als Bauteil im Motorraum von Kraftfahrzeugen, zur Dämmung der vom Verbrennungsmotor und Getriebe ausgehenden Wärme- und / oder Geräuschemission dient, wird häufig auch als Motorkapsel bezeichnet. Motorkapseln insbesondere zur Geräuschdämmung sind bereits hinreichend bekannt. Hierbei handelt es in der Regel um mehrlagige Verbundgebilde, insbesondere aus Polyurethanschaum, siehe bspw. WO98/18656A1oder DE 101 43 167 A1, einer Kombination aus Elastomer, wie zum Beispiel EPDM, und Kunststoff, siehe bspw. DE 100 34 301 A1 oder DE 10 2012 002 229 A1. In einer Sandwichstruktur mit Polyurethanschäumen ist es auch bekannt, eine zusätzliche Vliesschicht aus Baumwolle oder Glaswolle oder ähnlichem zur optimierten Geräuschdämmung zu verwende, siehe EP 2 604 476A1. Die Dokumente CA 2 189 727, US 3 815 611, US 2017/210034 und JP 2009 128036 offenbaren Einhausungen, die die gleiche Zusammensetzung wie hierin beansprucht umfassen. Sie betreffen jedoch keine Motorkapsel.

Diesen mehrschichtig aufgebauten Einhausungen ist gemein, dass sie nicht ausreichend dicht sind, wodurch sich hohe Wärmeverluste ergeben. Gleichzeitig müssen diese Systeme aufwendig befestigt und vor allem an den Befestigungsstellen zusätzlich abgedichtet werden.

Nachteilig bei den Einhausungen, insbesondere den Motorkapseln, ist ebenso die mangelnde Stabilität bei längerer Benutzung unter höheren Temperaturen und / oder in der Nähe von Heißquellen im Motorraum, z. Bsp. oberhalb 130°C. Bei höheren Temperaturen werden Einhausungen auf der Basis von bspw. PU, EPDM und / oder anderen Kunststoffen mit der Zeit spröde. Dies ist oft von außen nicht gleich zu erkennen. Die Isolierwirkung geht verloren und das Material verliert seine Festigkeit.

Gleichzeitig bedeuten die mehrlagigen Einhausungen einen vergleichsweise hohen Produktionsaufwand und es lassen sich sehr komplexe Geometrien nur schwer verwirklichen.

Der Erfindung liegt daher die Aufgabe zu Grunde, eine Motorkapsel bereitzustellen, die sich durch eine verbesserte Stabilität, d.h. Lebensdauer bei Temperaturen von mehr als 150°C, insbesondere bis zu Maximaltemperaturen von 250°C, auszeichnet. Die Motorkapsel soll ebenso komplexe Geometrien ermöglichen, ohne zusätzliche Produktionsschritte, wie zum Beispiel das Aufbringen zusätzlicher Klebschichten, eine ausreichende Abdichtung, incl. einer Abdichtung zu Durchbrüchen ohne zusätzliche Materialien, gewährleisten und sich im Produktionsmaßstab einfach herstellen lassen.

Gelöst wird diese Aufgabe erfindungsgemäß dadurch, dass die Motorkapsel flexibel ist und ein oder mehrere Bauteile aus einer einlagigen Kautschukmischung enthält, wobei die Kautschukmischung wenigstens einen Silikonkautschuk als einzige Kautschukkomponente und Mikrohohlkugeln enthält und wobei die Kautschukmischung vollständig vulkanisiert ist.

Überraschenderweise hat sich gezeigt, dass durch eine derartige Kautschukmischung, die sich wie Knetmasse verarbeiten lässt, sehr komplexe Geometrien möglich sind bei gleichzeitig guter Temperaturbeständigkeit bei Temperaturen bis zu 250°C.

Die Motorkapsel kann hierbei aus einem einzigen Bauteil bestehen, welches aus der genannten Kautschukmischung besteht, oder aber aus einzelnen Bauteilen zusammengesetzt werden, die entweder alle aus der genannten Kautschukmischung bestehen oder bei denen ein Teil aus der genannten Kautschukmischung besteht und es sich bei den weiteren Bauteile z. Bsp. die Seitenwand, Rückwand, Deckplatte, etc. handelt.

Die erfindungsgemäße Motorkapsel gewährleistet eine nahezu komplett dichte Einhausung und reduziert somit die Wärmeverluste deutlich.

Die Reduzierung des Wärmeverlustes wird vor allem im Motorraum eines Kraftfahrzeugs benötigt, um die durch den Verbrennungsprozess erzeugte Energie oder Wärme im oder am Motor so lange wie möglich zu halten, damit aufgrund der Restwärme ein besseres Kaltstartverhalten, eine Reibungsminimierung im Motor bzw. an den Motorbauteilen, ein schnelleres Aufheizen der Fahrgastkabine sowie ein besserer Komfort für den Fahrer bzw. die Fahrerin ermöglicht wird. Hierdurch wird gleichzeitig Kraftstoff eingespart und CO₂ reduziert.

Erfindungsgemäß ist die Motorkapsel aus einer einlagigen Kautschukmischung aufgebaut, die wenigstens einen Silikonkautschuk als einzige Kautschukkomponente enthält. Hierbei können alle der fachkundigen Person bekannten Silikonkautschuke verwendet werden. Möglich sind bspw. Silikonkautschuke, die auch als Poly(organo)siloxane bezeichnet werden. Sie weisen für Vernetzungsreaktionen zugängige Gruppen auf, wobei es sich vorwiegend, aber nicht ausschließlich, um Wasserstoffatome, Hydroxygruppen und Vinylgruppen handelt, welche sich jeweils in der Kette oder an den Kettenenden befinden können.

Es gibt kaltvernetzende Silikonkautschuke (RTV = Raumtemperatur vernetzend) und heißvernetzende Silikonkautschuke (HTV = Hochtemperatur vernetzend).

Bei den RTV-Silikonkautschuken lassen sich Ein- und Zweikomponentensysteme unterscheiden. Der Silikonkautschuk kann auch als Vormischung aus Polymer, Füllstoff und Öl, wie auf dem Markt üblich, eingesetzt werden.

Insbesondere zur Einstellung der Viskosität enthält die Kautschukmischung zusätzlich noch wenigstens einen Weichmacher. Hierbei können alle der fachkundigen Person bekannten Weichmacher verwendet werden, die kompatibel mit dem jeweiligen Silikonkautschuk sind. Insbesondere die Verwendung von Silikonöl hat sich hierbei als vorteilhaft erwiesen, da dies gut mit dem Silikonkautschuk verträglich ist. Besonders gut geeignet haben sich einvernetzende Silikonöle gezeigt, die sich an der Vernetzung der Kautschukmischung beteiligen und häufig als vernetzbare Silikonöle bezeichnet werden.

In einer bevorzugten Ausführungsform ist die Silikonkautschukmischung für die Motorkapsel vollständig vulkanisiert. Durch die bereits vollständige Vulkanisation der Kautschukmischung für die Einhausung ist eine Nachbehandlung, d.h. eine thermische Behandlung nach dem Einbringen z. Bsp. in den Motorraum eines Fahrzeugs, nicht mehr notwendig.

Um die thermischen oder auch akustischen Isolationseigenschaften zu verbessern, weist die Kautschukmischung eine Porenstruktur auf. Diese Porenstruktur erfolgt durch den Einsatz von Mikrohohlkugeln, die in die Kautschukmischung eingemischt sind. Bei den Mikrohohlkugeln, oft auch einfach als Mikrokugeln bezeichnet, handelt es sich um hohle Kugeln (Mikrosphären) mit einem Durchmesser im µm-Bereich aus Glas, Phenolharz, Kohlenstoff oder thermoplastischem Kunststoffmaterial. Es gibt es sie in expandierbarer Form, wobei sie mit einem Treibmittel gefüllt sind und sich beim Erwärmen ausdehnen, oder in vorexpandierter Form, bei der die Ausdehnung schon abgeschlossen ist.

Bevorzugt enthält die Kautschukmischung 2 bis 200 phr Mikrokugeln, besonders bevorzugt 2 bis 30 phr, ganz besonders bevorzugt 2 bis 15 phr bereits expandierte Mikrokugeln aus thermoplastischen Material, so dass die Kautschukmischung bereits vor der Vernetzung eine Porenstruktur aufweist.

Mikrokugeln bieten den Vorteil der Bildung einer geschlossenen Porenstruktur, die für Isolationszwecke wegen geringerer Konvektion in den Poren besser geeignet ist. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung oder -verarbeitung ergeben. Der Kautschukmischung verliert an Festigkeit, was beim Aufbau von sehr komplexen Bauteilen für die Einhausung von Nachteil ist.

Gemäß einer alternativen Ausführungsform enthält die Kautschukmischung 10 bis 200 phr Mikrokugeln aus Glas. Mit dieser Variante lassen sich Bauteile für die Motorkapsel mit höherer Standfestigkeit und geringerer Kompressibilität erhalten, da sich Mikrokugeln aus Glas im Gegensatz zu Mikrokugeln aus thermoplastischem Material nicht komprimieren lassen.

Des Weiteren kann die Kautschukmischung neben den üblichen Füllstoffen noch zusätzliche Pigmente enthalten. Mit diesen Pigmenten ist es möglich, das einzige Bauteil oder einige Bauteile für die Motorkapsel individuell nach Kundenwunsch einzufärben. So können bspw. thermochromische Pigmente verwendet werden, die sich bei einer definierten Temperatur oder innerhalb eines bestimmten Temperaturbereiches verfärben. Hiermit können zum Beispiel Überheizungen angezeigt werden. Oder aber es können lasermarkierbare Pigmente verwendet werden, wie sie bspw. aus DE102009044718A1 bekannt sind.

Zur besseren Ableitung von elektrischen Spannungen kann die Kautschukmischung zusätzlich leitfähige Additive wie leitfähige Ruße und / oder Kohlenstoffnanoröhren (CNT, engl. carbon nano tubes) enthalten.

Zur Verbesserung des Flammschutzes enthält die Kautschukmischung vorteilhafterweise wenigstens ein Flammschutzmittel. Als Flammschutzmittel können alle der fachkundigen Person bekannten Flammschutzmittel verwendet werden. Aufgrund aktueller gesetzlicher Vorgaben ist es allerdings bevorzugt, wenn das verwendete Flammschutzmittel frei von Halogen und Antimontrioxid ist. Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Carbonate, wie Calciumcarbonat oder Magnesiumcarbonat, oder Blähgraphit in Frage. Als besonders gut geeignet haben sich Stannate, insbesondere Zinkhydroxystannat (ZHS), gezeigt. ZHS ist besonders ungefährlich für den Menschen, so dass keine besonderen Sicherheitsmaßnahmen erforderlich sind. Ferner sind bereits vorgemischte Zubereitungen unterschiedlicher Flammschutzmittel einsetzbar, die handelsüblich erhältlich sind.

Die Herstellung der Motorkapsel erfolgt dadurch, dass die einzelnen Bauteile der Motorkapsel aus der beschriebenen vollständig vulkanisierten Silikonkautschukmischung durch der fachkundigen Person bekannten Verfahren, insbesondere aber durch Extrudieren oder Kalandrieren der Kautschukmischung, erhalten und entsprechend zusammengefügt werden.

Die einzelnen Bauteile werden insbesondere bei komplexen Geometrien erst im Motorraum zusammengefügt. Es ist aber auch möglich, die einzelnen Bauteile erst zusammenzufügen und dann anschließend das einzuhausende Objekt mit der Einhausung zu versehen.

## Patentansprüche

1. Motorkapsel, **dadurch gekennzeichnet, dass** sie flexibel ist und ein oder mehrere Bauteile aus einer einlagigen Kautschukmischung enthält, wobei die Kautschukmischung wenigstens einen Silikonkautschuk als einzige Kautschukkomponente und Mikrohohlkugeln enthält und wobei die Kautschukmischung vollständig vulkanisiert ist.

2. Motorkapsel nach Anspruch 1, **dadurch gekennzeichnet, dass** sie aus einem einzigen Bauteil bestehend aus einer einlagigen Kautschukmischung aufgebaut ist, wobei die Kautschukmischung wenigstens einen Silikonkautschuk als einzige Kautschukkomponente und Mikrohohlkugeln enthält und wobei die Kautschukmischung vollständig vulkanisiert ist.

## Claims

1. Engine enclosure, **characterized in that** said enclosure is flexible and contains one or more component parts made of a single-layered rubber mixture, wherein the rubber mixture contains at least one silicone rubber as the sole rubber component and hollow microspheres and wherein the rubber mixture is fully vulcanized.

2. Engine enclosure according to Claim 1, **characterized in that** said enclosure is constructed from a single component part made of a single-layered rubber mixture, wherein the rubber mixture contains at least one silicone rubber as the sole rubber component and hollow microspheres and wherein the rubber mixture is fully vulcanized.

## Revendications

1. Capsule de moteur, **caractérisée en ce qu'**elle est flexible et contient un ou plusieurs composants composés d'un mélange de caoutchouc monocouche, le mélange de caoutchouc contenant au moins un caoutchouc de silicone en tant qu'unique composant de caoutchouc et des microbilles creuses et le mélange de caoutchouc étant totalement vulcanisé.

2. Capsule de moteur selon la revendication 1, **caractérisée en ce qu'**elle est construite d'un seul composant constitué d'un mélange de caoutchouc monocouche, le mélange de caoutchouc contenant au moins un caoutchouc de silicone en tant qu'unique composant de caoutchouc et des microbilles creuses et le mélange de caoutchouc étant totalement vulcanisé.
